# FASCICULE DE BREVET EUROPEEN

(11) **EP 3 253 648 B1**
(45) Date de publication et mention de la délivrance du brevet: **10.04.2019**
(21) Numéro de dépôt: 16707177.8
(22) Date de dépôt: 02.02.2016
(51) Int. Cl.: B63B 22/20, B63C 11/52

(54) **DISPOSITIF UTILE POUR LE TRANSPORT ET/OU MANUTENTION DE MATÉRIEL EN MILIEU SUBAQUATIQUE POUR LA RÉALISATION DE TRAVAUX.**
VORRICHTUNG ZUR VERWENDUNG BEIM TRANSPORT UND/ODER DER HANDHABUNG VON MATERIAL IN EINER UNTERWASSERUMGEBUNG ZUR DURCHFÜHRUNG VON ARBEITEN
DEVICE OF USE IN TRANSPORTING AND/OR HANDLING MATERIEL IN AN UNDERWATER ENVIRONMENT FOR CARRYING OUT WORK

(30) Priorité: 06.02.2015 FR 1550969
(43) Date de publication de la demande: 13.12.2017
(73) Titulaire: Libervit, 66000 Perpignan (FR)
(72) Inventeur: CARDONA, Yvan, 66430 Bompas (FR)
(74) Mandataire: Domange, Maxime
(86) Numéro de dépôt international: PCT/FR2016/050212
(87) Numéro de publication internationale: WO 2016/124850

(56) Documents cités:
- WO-A1-79/01136
- GB-A- 2 118 871
- US-A- 3 601 827
- US-A- 3 659 299

## Description

La présente invention concerne un dispositif utile pour le transport et/ou manutention de matériel comprenant au moins un outil, en milieu subaquatique, c'est-à-dire sous l'eau, en mer ou dans une rivière, pour la réalisation de travaux à l'aide dudit outil.

Dans son application principale le dispositif selon l'invention permet d'intervenir en milieu subaquatique, par exemple dans une épave de navire pour libérer des plongeurs piégés ou récupérer du matériel. Et, dans le cas des Sapeurs-Pompiers, le dispositif selon l'invention doit pouvoir être utilisé pour extraire aisément et rapidement les personnes d'un véhicule tombé à l'eau, ou dans des cas plus particuliers de sauver des personnes piégées dans un véhicule par la montée des eaux. Il peut également être utilisé pour porter secours à des visiteurs d'épaves englouties à des profondeurs raisonnables 30 à 60 mètres ce qui est malheureusement assez fréquent, notamment en période estivale, des plongeurs se faisant piéger dans une épave par des éléments métalliques rendus instables par la corrosion et un membre de la palanquée peut avoir le temps de remonter en surface pour alerter les secours et permettre aux sauveteurs de venir dégager le plonger piégé a l'aide des dits équipements. En outre, des applications industrielles pour travaux sous-marins sont aussi envisageables.

Toutefois, Il y a lieu de préciser que le dispositif peut également être dédié à une utilisation terrestre ou hors d'eau après avoir été transporté sous l'eau d'un point A à un point B puis par exemple hissé à bord d'un navire et être ainsi utilisé comme matériel de travaux de force sur le navire.

Selon la présente invention, ce dispositif doit pouvoir être utilisé pour les besoins spécifiques de certaines unités spéciales de la marine, mais également pour les besoins des Plongeurs Sapeurs-Pompiers, pour réaliser des travaux de force en milieu sous-marin, dans des conditions de surprise impliquant discrétion et rapidité d'intervention tant en ce qui concerne la mise en place et que la mise en oeuvre. En particulier, le dispositif selon l'invention doit permettre de pour pénétrer et neutraliser les membres d'équipage à bord d'une embarcation dans la discrétion la plus totale, en utilisant une cisaille ou un écarteur pour endommager une pièce maîtresse de cette embarcation en cas de prise d'otages ou suspicion de substances illicites de la part des forces de l'ordre.

A ce jour, des dispositifs existants sont :
- soit des outils pneumatiques; avec un compresseur d'air restant en surface relié audit outil alimenté en air comprimé, ce qui est inacceptable quand on recherche la discrétion la plus totale, notamment le silence, du fait de la production de bulles d'air en fonctionnement avec l'outil en milieu subaquatique,
- soit ce sont des outils équipés d'une pompe manuelle intégrée ce qui demande à l'opérateur une action de pompage, laquelle est compliquée en milieu aquatique.

Le but principal de l'invention est donc de fournir un dispositif qui puisse être transporté et opérer en milieu subaquatique discrètement et qui soit facilement et rapidement maniable par les opérateurs tant en ce qui concerne la phase d'approche du site d'intervention que pour l'opération et qui soit fiable en milieu subaquatique.

Pour ce faire, la présente invention fournit un dispositif utile pour le transport et/ou la manutention de matériel pour la réalisation de travaux, en milieu subaquatique comprenant au moins les composants suivants:
- une centrale hydraulique flottante comprenant dans une première enceinte, de préférence à paroi cylindrique, un groupe motopompe électrique, une batterie apte à alimenter en électricité le groupe motopompe, un réservoir de fluide, de préférence de l'huile, la dite première enceinte étant apte à être rendue submersible par des premiers lests,
- au moins un outil hydraulique relié ou apte à être relié à au moins un raccord hydraulique de la dite centrale hydraulique par au moins un tuyau flexible,
- au moins un flotteur indépendant, de préférence à paroi cylindrique, relié ou apte à être relié audit outil hydraulique via une élingue de longueur ajustable, ledit flotteur étant apte à être rendu submersible par des seconds lests, et
- une commande à distance filaire commandant la mise en marche ou arrêt du groupe motopompe, la dite commande filaire à distance comprenant une poignée équipée d'un contacteur électrique à une première extrémité d'un fil électrique, la deuxième extrémité du fil électrique étant reliée ou apte à être reliée au moins audit groupe motopompe.

On entend ici par « centrale hydraulique » aussi dénommée « centrale hydroélectrique », un ensemble de composants apte à mettre un fluide sous pression pour l'acheminer depuis un réservoir vers un outil utilisant l'énergie hydraulique du fluide sous pression, dénommé «outil hydraulique», à l'aide d'une pompe via au moins un tuyau. WO7901136 décrit une centrale hydraulique immergée pour l'alimentation d'outils sous-marins.

On comprend que ledit groupe motopompe est apte à mettre sous pression ledit fluide du réservoir de fluide pour l'acheminer vers ledit outil hydraulique via ledit tuyau flexible.

Le dispositif selon l'invention permet de transporter et opérer aisément et discrètement les différents composants du matériel de la centrale hydraulique et outil hydraulique en situation subaquatique, en en contrôlant la profondeur d'immersion à l'aide des dits premiers et seconds lests.

La mise en oeuvre d'un flotteur indépendant pour supporter un dit outil est avantageuse en ce qu'elle permet de :
- ne pas faire supporter à l'opérateur le poids de l'outil, l'outil étant comme suspendu à un équilibreur de charge et pouvant être, à tout moment, déconnecté et connecté au flexible hydraulique qui le relie à la centrale hydraulique, notamment pour changer d'outil directement dans l'eau, et
- mettre en oeuvre plusieurs outils autoportés par plusieurs flotteurs et permettre à l'opérateur de changer d'outil sans déplacer la centrale hydraulique et/ou de passer ou opérer dans une espace de volume restreint et/ou difficile d'accès sans y déplacer la centrale hydraulique en opérant à distance de la centrale hydraulique.

Chaque dit flotteur se trouve relié à l'outil par une élingue ajustable en longueur de préférence par un système rapide et manuel, permettant ainsi à l'operateur d'éloigner ou de rapprocher le flotteur de l'outil en fonction du lieu où il doit intervenir.

Le flotteur et la centrale hydraulique sont flottants en l'absence de lest et peuvent rendu submersibles par l'adjonction des dits lests, notamment de 50 à 500 grammes pour un outil de 10 à 15 kg et un flotteur de 1 à 5 kg et 10000. à 15000 cm3 avec une centrale de 15 à 20kg et 15000 cm3 à 20000 cm3, permettant ainsi d'obtenir la flottabilité appropriée pour opérer à une profondeur jusqu'à 50 à 100m.

La suppression des lests permet de remonter les outils et la centrale hydraulique en surface sans avoir à fournir d'effort du fait de leur flottabilité sans charge. En outre, l'ajout de lests au maximum permet- si cela est requis - de faire couler complétement le matériel avec pour objectif de le faire disparaître après opération.

En outre, le contrôle de la flottabilité par l'ajout ou retrait de lests est aussi avantageux au regard du critère de discrétion recherchée dans le cadre d'opérations spéciales, en comparaison à un système de réserve d'air permettant de faire varier un volume d'air pour moduler la flottabilité. En effet, dans ces systèmes de réserve d'air, les bulles d'air générées lors de l'évacuation d'air sont visibles et sonores.

Enfin, ce système de modulation de la flottabilité par adjonction de lests présente l'avantage de pouvoir modifier la position de la centrale hydraulique et/ou du flotteur en cours de transport et/ou d'opération, notamment entre une position horizontale de sa direction axiale longitudinale pour un déplacement horizontale et une position verticale de sa direction axiale longitudinale pour un déplacement vertical, en fonction de la répartition du positionnement des lests dans les dits compartiments, comme explicité ci-après.

Plus particulièrement, le dit outil hydraulique est par exemple un outil du type pince, cisaille, écarteur, perceuse, scie, notamment scie circulaire telle que disqueuse, et vérin, et tout autre outil hydraulique adapté à une ouverture de paroi, porte ou trappe, par découpe, levage et/ou poussée.

Pour les outils tels que pince, cisaille ou écarteur, un seul flexible est requis dans lequel le fluide fait l'aller sous pression et retour vers le réservoir dans le même flexible. Pour les outils spécifiques à mouvement de va et vient alternés du type perceuse ou scie, la centrale hydraulique est également reliée à l'outil via un deuxième raccord et deuxième flexible dits de retour au réservoir.

Les différents outils ainsi que les flotteurs et dite première enceinte seront matériaux adaptés au milieu aquatique eau douce ou eau salée, et revêtus de traitements de surface anti corrosion garantissant une durée de vie optimale.

La mise en oeuvre de matériel hydraulique est plus fiable et plus puissante que du matériel électrique ou pneumatique pour exécuter des travaux requérant des efforts importants et ne génère pas de nuisance. L'intérêt de la transmission hydraulique aussi dénommé transmission hydrostatique réside dans le rapport encombrement, poids, puissance véhiculé sans égal, ainsi que la facilité d'implantation, les arbres de transmission, cardans, poulies, etc. étant remplacés par des tubes ou conduites flexibles hydrauliques, ainsi qu'à la grande variété d'organes mécaniques pouvant utiliser cette puissance.

De préférence, le dispositif selon l'invention comprend :
- un premier connecteur électrique est fixé à la dite première enceinte, ledit premier connecteur électrique étant relié au moins audit groupe motopompe et à la batterie, et
- la deuxième extrémité du fil électrique de la dite commande à distance filaire est reliée à un deuxième connecteur électrique mâle ou femelle apte à être branché sur ledit premier connecteur électrique, femelle ou respectivement mâle, au niveau de ladite centrale hydraulique.

Ce mode de de réalisation est préféré car il facilite le transport et/ou la manutention de la centrale hydraulique avant opération et il permet de changer la commande filaire à distance ou son fil électrique pour adapter la longueur du fil électrique de la commande filaire à distance en fonction de la distance nécessaire entre l'outil et la centrale hydraulique selon le site d'intervention.

De préférence encore, la dite centrale hydraulique comprend un interrupteur principal coupe-circuit accessible au niveau de la dite première enceinte apte à commander la mise sous tension électrique ou hors tension électrique dudit groupe motopompe par ladite batterie, la dite commande à distance étant apte à commander la mise en marche ou arrêt du groupe motopompe lorsque celui-ci est sous tension électrique par la dite batterie au niveau dudit interrupteur principal.

Ce mode de réalisation est avantageux car il permet d'obtenir un interrupteur mise en arrêt d'urgence qui requiert un câblage de plus grosse section que la commande filaire et serait mal aisé à déporter via la commande filaire.

De préférence encore, ledit premier connecteur électrique comprend deux premières bornes de contact électrique, qui ne sont pas reliées en contact électrique entre elles au niveau dudit premier connecteur en l'absence de branchement dudit deuxième connecteur dans ledit premier connecteur et ne deviennent reliées en contact électrique entre elles et ainsi aptes à transmettre la commande de mise en marche ou arrêt du dit groupe motopompe à partir de la dite commande à distance seulement lorsque le dit deuxième connecteur électrique de la dite commande à distance filaire est branché sur ledit premier connecteur.

On comprend toutefois que le branchement entre les premier et deuxième connecteurs est opérant pour faire fonctionner le groupe motopompe sous réserve que la dite commande à distance commande la mise en marche du groupe motopompe d'une part et que, d'autre part, celui-ci soit sous mis tension électrique par la dite batterie au niveau du dit interrupteur principal de la centrale hydraulique.

Ainsi, le dit premier connecteur est mis hors tension en l'absence de branchement du dit deuxième connecteur électrique de la commande filaire, ce qui représente une sécurité dans le cas où le groupe motopompe est immergé et est mis sous tension, et que le dit deuxième connecteur de la dite commande filaire n'est pas branché sur le dit premier connecteur électrique. En effet, ainsi, il n'y a pas de risque de court-circuit ou de phénomènes électrolytiques pouvant endommager le dit premier connecteur en position immergée, si un utilisateur venait à mettre la centrale hydraulique dans l'eau sans avoir pensé à la mettre hors tension par l'intermédiaire de l'interrupteur coupe circuit général. Un tel phénomène électrolytique pourrait détruire les bornes électriques du premier connecteur qui servent de contact au moment de la connexion de la commande à distance filaire, en quelques minutes seulement.

Plus particulièrement, ledit premier connecteur électrique est un connecteur femelle comprenant deux premières bornes de contact au fond de deux premières cavités, et un premier ergot mobile en translation au sein d'une troisième cavité dudit premier connecteur, le dit déplacement en translation dudit premier ergot permettant l'établissement de la liaison de contact électrique entre les deux premières bornes du premier connecteur, et le dit deuxième connecteur électrique est un connecteur male comprenant deux deuxièmes bornes mâles aptes à contacter les dites premières bornes au sein des dites premières cavités et un élément de butée apte à déplacer le dit premier ergot au sein de la dite troisième cavité permettant l'établissement de la liaison de contact électrique entre les deux premières bornes du premier connecteur, lorsque ledit deuxième connecteur est branché sur ledit premier connecteur.

Plus particulièrement, le déplacement en translation dudit premier ergot en translation au sein d'une dite troisième cavité actionne un bouton d'un interrupteur qui assure la continuité de liaison électrique d'un fil électrique reliant l'une des dites premières bornes à la batterie.

Plus particulièrement, ladite batterie est apte à être chargée par un chargeur indépendant comprenant un troisième connecteur électrique apte à se brancher sur une des deux premières bornes reliée à la batterie et une troisième borne du premier connecteur reliée à l'autre pôle de la batterie.

De préférence, le dit réservoir de fluide de la centrale hydraulique comprend un piston mobile apte à être déplacé par un ressort de manière à confiner en permanence le fluide dans un espace entièrement rempli de fluide.

Ce réservoir spécifique autorise les changements de position de la centrale hydraulique en garantissant le parfait fonctionnement des outils quel que soit la position de la centrale hydraulique. Ce système à piston -ressort est préféré au détriment d'un système de vessie plus fragile ou d'un système sous pression qui engendrerait des fuites et aussi serait affecté par les variations de températures.

De préférence encore, la dite commande filaire à distance comprend une poignée apte à être fixée sur le dit outil hydraulique.

Ceci permet de pouvoir opérer le dit outil en appuyant sur le dit contacteur électrique, celui-ci fonctionnant en mode marche du groupe motopompe lorsqu'il est maintenu appuyé par l'opérateur.

Plus particulièrement, le dit outil hydraulique comprend un raccord apte à permettre la fixation de la dite poignée sur ledit outil via un raccord de la dite poignée, le raccordement permettant un verrouillage et déverrouillage par un mouvement combiné de translation et rotation relative du raccord de la poignée par rapport au raccord de l'outil hydraulique et la dite fixation de la poignée autorisant une rotation relative de la poignée par rapport à l'outil, une fois ladite poignée verrouillée, la dite rotation relative de la poignée étant apte à contrôler le passage de l'huile à travers le raccord hydraulique de l'outil et le dit tuyau flexible au moins pour le retour de l'huile vers la centrale hydraulique.

Plus particulièrement encore, la dite première enceinte de la dite centrale hydraulique est de forme cylindrique et comprend plusieurs premiers compartiments externes latéraux accessibles depuis l'extérieur, de préférence sous forme de poches d'une enveloppe la recouvrant, aptes à recevoir des dits premiers lests, lesdits compartiments étant positionnés et répartis de manières à pouvoir faire adopter une position de la direction longitudinale axiale de la dite première enceinte (X₁X₁') horizontale ou verticale selon le positionnement et la quantité de dits premiers lests dans les différents premiers compartiments externes.

Plus particulièrement encore, le dit flotteur est de forme cylindrique et comprend des seconds compartiments externes latéraux accessibles depuis l'extérieur, de préférence sous forme de poches d'une enveloppe le recouvrant, aptes à recevoir des dits seconds lests, et ledit flotteur comprenant au moins deux crochets de fixation apte à permettre la fixation d'une extrémité de la dite élingue, les dits crochets étant positionnés de manière à pouvoir faire adopter une position du flotteur avec sa direction longitudinale axiale (X₂X₂') horizontale ou verticale selon le positionnement de l'élingue sur l'un ou l'autre des dits crochets et selon le positionnement et la quantité de dits seconds lests dans les différents seconds compartiments externes.

La position verticale peut être avantageuse pour passer dans un espace restreint en largeur tandis que la position horizontale peut être avantageuse pour passer ou opérer dans un espace réduit en hauteur.

Plus particulièrement encore, le dit outil hydraulique est choisi parmi une cisaille, une pince, un écarteur, un vérin, une perceuse ou une scie.

Plus particulièrement encore, le dispositif selon l'invention comprend un deuxième flexible de retour du fluide depuis ledit outil vers le dit réservoir de la centrale hydraulique lorsque ledit outil est choisi parmi une perceuse ou une scie.

Pour une cisaille, une pince ou un écarteur, un simple effet est suffisant avec un seul et même tuyau pour l'aller et retour de l'huile entre la centrale hydraulique et l'outil.

La présente invention a également pour objet un procédé de transport et/ou de réalisation de travaux en milieu subaquatique avec un dispositif selon l'invention dans lequel on transporte en milieu aquatique les dits composants avec au moins ledit outil hydraulique suspendu au dit flotteur en position subaquatique.

Plus particulièrement, dans un procédé on met en oeuvre le dispositif pour une intervention subaquatique, de préférence jusqu'à une profondeur jusqu'à 100m, en réglant la profondeur d'immersion de ladite centrale hydraulique et dudit flotteur en contrôlant leur flottabilité par ajout de dits premiers et seconds lests dans les dits premiers et seconds compartiments et en ajustant la longueur de la dite élingue de liaison entre ledit outil hydraulique et le dit flotteur.

D'autres caractéristiques et avantages de la présente invention ressortiront mieux à la lecture de la description qui va suivre, faite de manière illustrative et non limitative, en référence aux dessins annexés suivants.
La figure 1A représente schématiquement le dispositif selon l'invention en phase de déplacement en surface.
Les figures 1B et 1C représentent schématiquement le dispositif selon l'invention en phase d'immersion sous-marine avec le flotteur en position horizontale (figure 1B) et le flotteur en position verticale (figure 1C).
Les figures 2A et 2B sont des vues de la centrale hydraulique (figure 2A) et du flotteur (figure 2B) montrant leur face d'extrémité selon leur axe longitudinal X₁X₁' pour la centrale hydraulique (figure 2A) et X₂X₂' pour le flotteur (figure 2B).
La figure 3 est vue schématique simplifiée de montage électrique entre le groupe motopompe 6, la batterie, le premier connecteur électrique 13 et la commande à distance 2.
La figure 4A est une vue de commande à distance filaire 2 avec une poignée de commande 22 reliée à un connecteur électrique 21 par un fil électrique 20.
La figure 4B est une vue frontale du raccord 2b de la poignée 22 destinée à verrouiller la poignée 22 sur l'outil hydraulique 3.
Les figures 4C et 4D sont des vues en éclaté partiel montrant le détail du raccordement de la poignée 22 avec l'outil 3 en cours de verrouillage (figure 4A) et après verrouillage (figure 4B).
Les figures 5A et 5B sont des vues de côté de l'extrémité 210 du connecteur électrique 21 de la poignée 22 et d'un connecteur électrique 13 complémentaire de la centrale hydraulique 1, avant branchement (figure 5A) et après branchement l'un avec l'autre (figure 5B).
Les figures 5C et 5D sont des vues en éclaté de l'intérieur du premier connecteur 13 avant branchement (figure 5C) et en cours de branchement (figure 5D) du deuxième connecteur 21.
La figure 6A est une vue frontale du connecteur 13 de la face frontale 1c de la centrale hydraulique 1.
La figure 6B est une vue frontale de la pièce d'extrémité 210 du connecteur électrique 21 relié à la poigné de commande 22.
Le figure 7 est une vue montrant les différents éléments l'intérieur de la centrale hydraulique 1.
Les figures 7A et 7B sont des vues en coupe longitudinale d'une partie de la centrale hydraulique 1 comprenant le groupe motopompe 6 et le réservoir d'huile 7 plein (figure 7A) et partiellement vide (figure 7B).
Les figures 8A et 8B sont des vues d'une cisaille hydraulique 3a (figure 8A) et d'un écarteur hydraulique 3b (figure 8B).

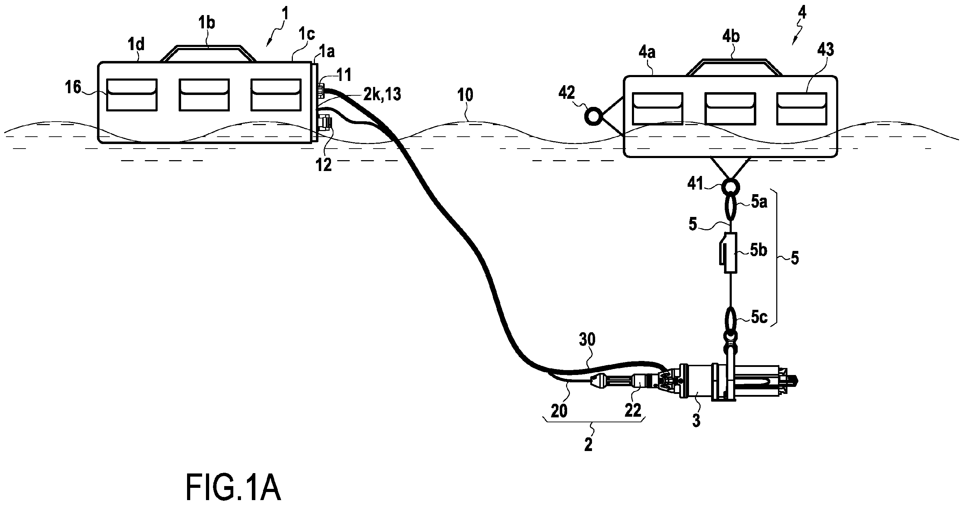

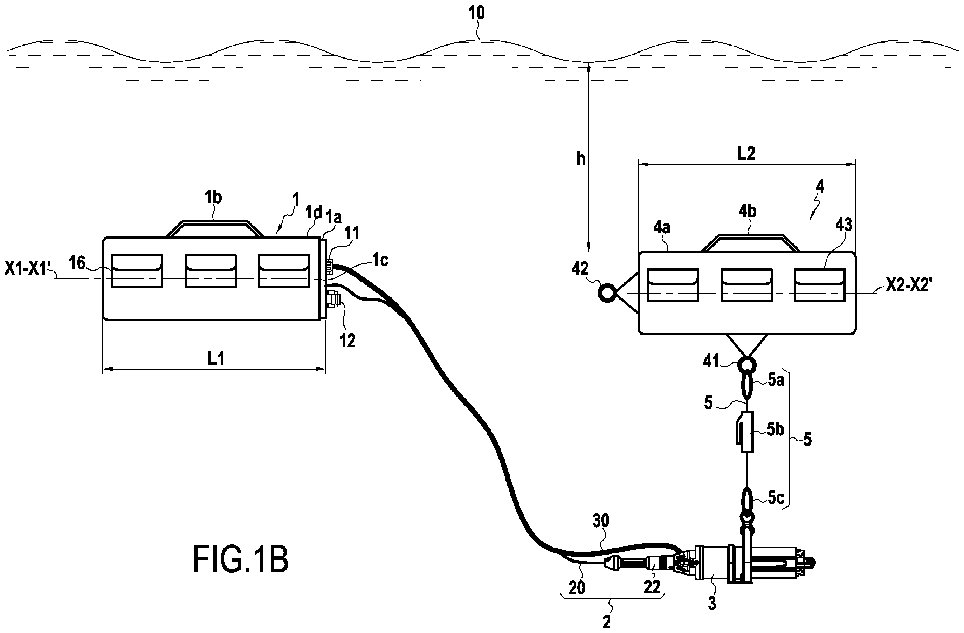

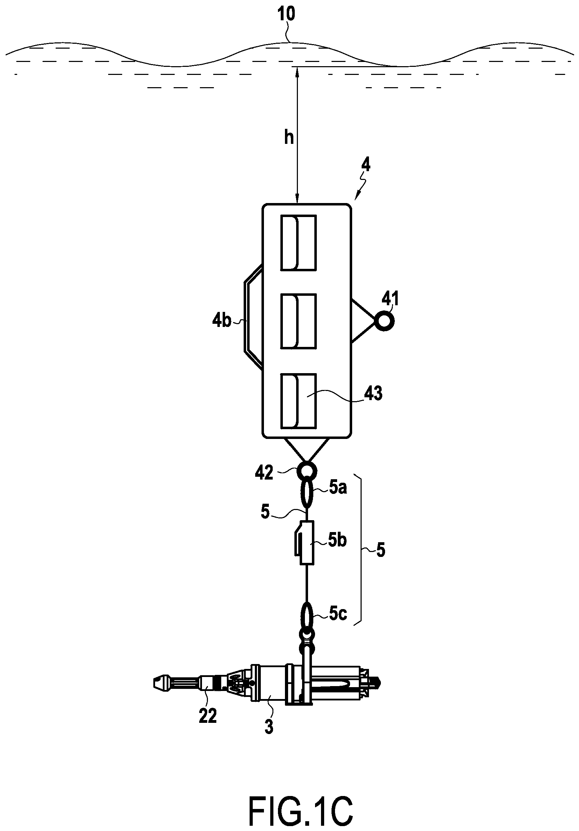

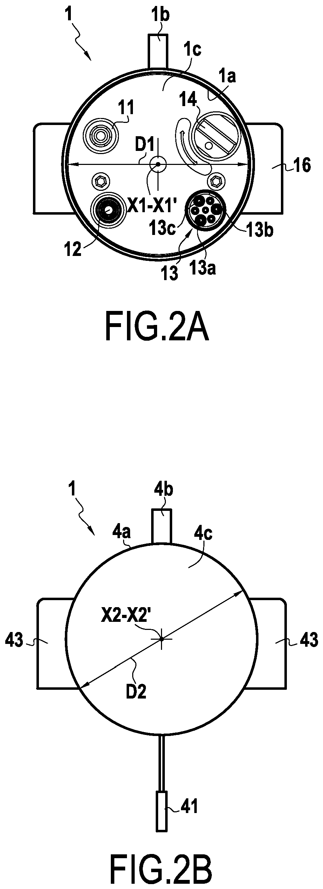

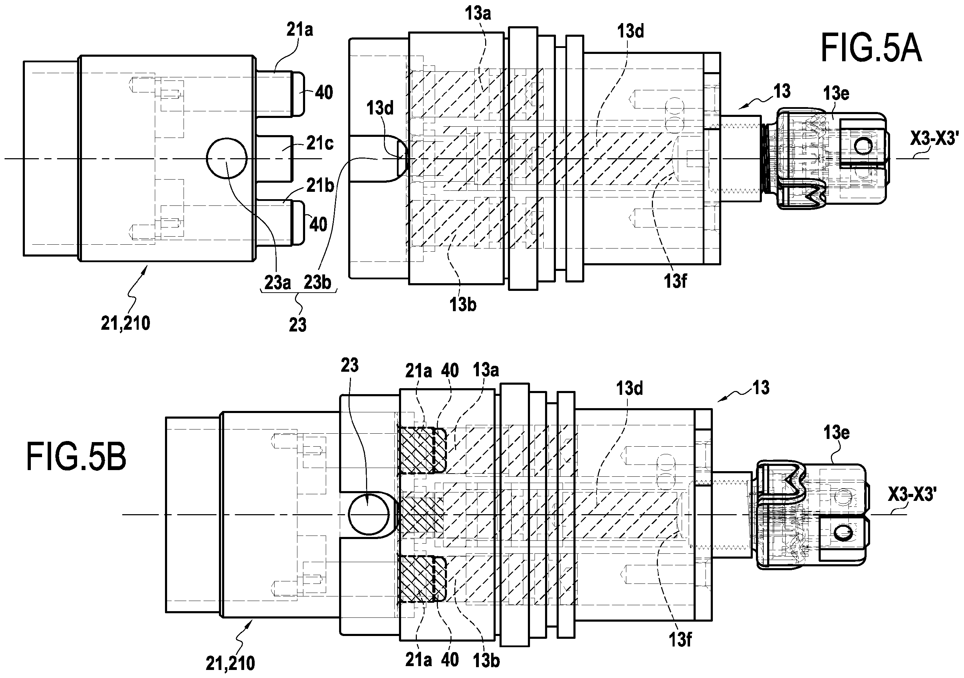

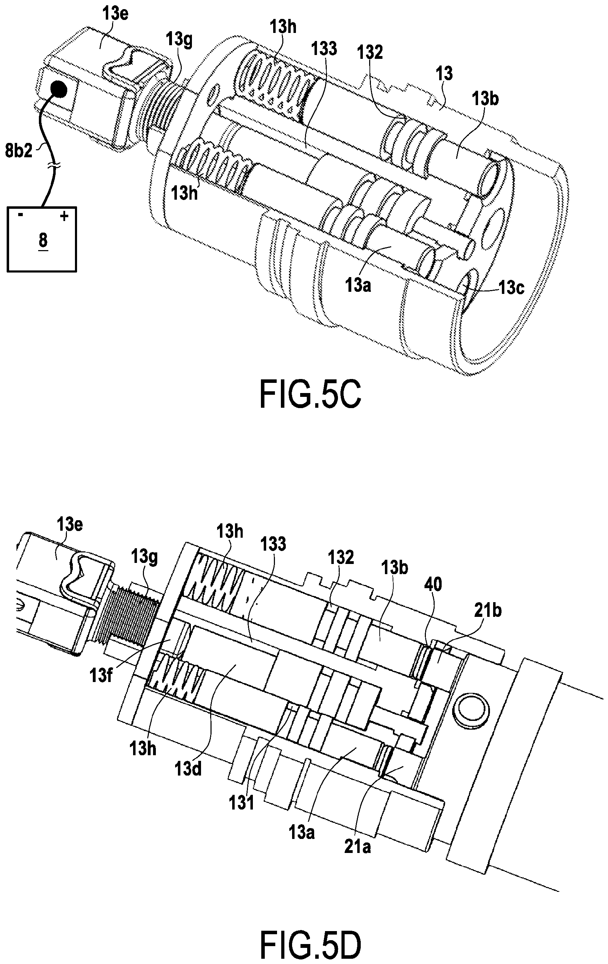

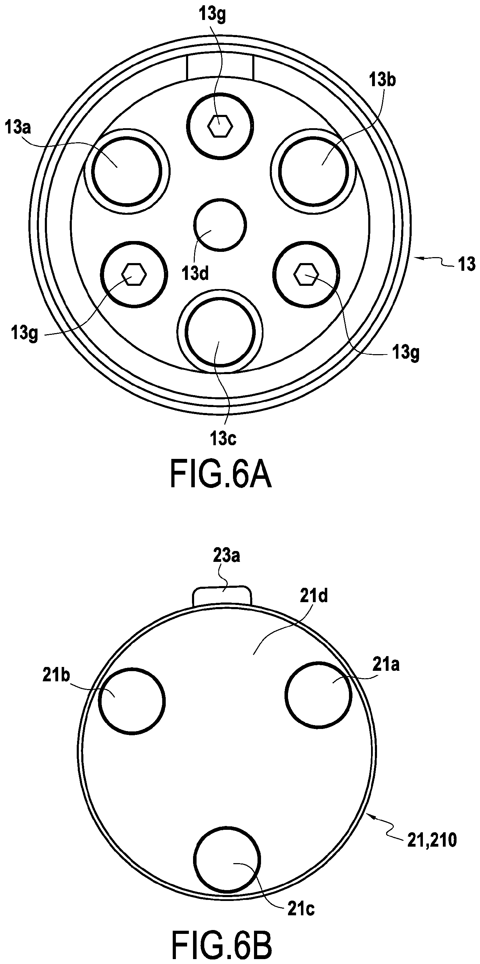

Le dispositif d'invention en milieu subaquatique présenté sur les figures 1 à 8 comporte les composants suivants.

Une centrale hydraulique 1 comprend une première enceinte la en matériau composite comprenant une paroi latérale cylindrique à section circulaire comprenant une première face frontale 1c à une de ses extrémités longitudinales. La paroi latérale cylindrique la et la deuxième face frontale à l'autre extrémité longitudinale de la première enceinte la sont recouvertes d'une enveloppe 1d. L'enveloppe 1d comprend 6 poches latérales 16, 3 poches de chaque côté longitudinal étant disposées côte à côte dans la direction longitudinale X₁X₁' de ladite paroi cylindrique et diamétralement opposées avec les 3 autres poches de l'autre côté. Une poignée supérieure 1b de l'enveloppe permet la manutention de ladite centrale hydraulique 1 à terre.

Ladite première enceinte la renferme en son sein un groupe motopompe 6 de 12V et 900 W commercialisé par la société HPI (France), un réservoir d'huile 7 de 1,5L et une batterie 8 basse tension 12V et de 17A/h.

Les poches 16 sont équipées d'un rabat d'ouverture réversible de manière à pouvoir y disposer des lests notamment sous forme de sachets de grenailles (copeaux d'inox) de 50 à 500g.

La première enceinte la est dimensionnée de sorte que ladite centrale hydraulique de poids de 15 à 20 kg soit flottante en l'absence de lest dans lesdites poches 16.La longueur L1 de la première enceinte est de 50 à 100 cm plus particulièrement 60 cm et son diamètre D1 de 15 à 20 cm plus particulièrement 16 cm.

Le dispositif selon l'invention comprend un ou plusieurs flotteurs indépendants 4 également à paroi latérale cylindrique à section circulaire, de longueur L2 et diamètre D2 recouvert d'une enveloppe en matériau textile comprenant des poches latérales 43 aptes à recevoir des seconds lests. Chaque enveloppe comprend 6 poches 43 comprenant 3 poches latérales disposées successivement dans la direction longitudinale X₂X₂' de chaque côté de la paroi cylindrique, les 3 poches de chaque côté étant diamétralement opposées avec celles de l'autre côté. Ladite paroi cylindrique du flotteur 4 comprend au moins 2 crochets 41 et 42 disposés pour l'un 42 sensiblement en vis-à-vis du centre d'une paroi frontale circulaire à une de ses extrémités longitudinales et pour l'autre 41 en vis-à-vis du milieu de la longueur de sa paroi latérale longitudinale cylindrique. Une poignée supérieure 4b diamétralement opposée au crochet 41 permet la manutention du flotteur à terre. Ces crochets 41 et 42 permettent la fixation d'un mousqueton 5a à une extrémité d'une élingue 5. L'autre extrémité de l'élingue 5 est fixée par un deuxième mousqueton 5c à un outil hydraulique 3 décrit ci-après. La longueur de l'élingue 5 est ajustable au niveau d'un dispositif d'ajustement de longueur 5b.

La centrale hydraulique 1 et le flotteur 4 peuvent adopter une position horizontale avec leur direction longitudinale X₁X₁' et X₂X₂' en position horizontale ou verticale. En particulier, le flotteur 4 peut, de par sa paroi latérale cylindrique longitudinale, adopter une position avec sa direction longitudinale X₂X₂' en position verticale lorsque l'élingue 5 est fixée au niveau du crochet frontal 42 et inversement, une position horizontale lorsque l'élingue 5 est fixée au crochet inférieur 41. De même, la centrale hydraulique 1 de par sa paroi latérale cylindrique longitudinale peut adopter les 2 positions horizontale ou verticale. Pour favoriser la position horizontale, on répartira des lests de manière homogène en terme de poids homogène dans les différentes poches 16 le long de la direction longitudinale X₁X₁' de la centrale hydraulique 1 et respectivement poches 43 lelong de la direction longitudinale X₂X₂' du flotteur 4. En revanche, pour favoriser la position verticale, on peut disposer des poids plus importants au niveau de l'extrémité longitudinale que l'on souhaite être la plus basse. Toutefois, en pratique, la position longitudinale est liée à la traction fournie par l'outil suspendu, de sorte que les poids peuvent être indifféremment logés dans quelque poche que ce soit, sans impact sur l'équilibre de l'ensemble flotteur et outil.

Pour le transport du matériel d'un point A à un point B en position subaquatique mais à profondeur d'immersion sensiblement constante on préfèrera que le flotteur 4 et la centrale 1 adoptent une position horizontale. En revanche, pour le déplacement du matériel d'un point A à un point B à des profondeurs d'immersion différentes et disposées le long d'une direction verticale, on préfèrera disposer le flotteur 4 et la centrale hydraulique 1 en position verticale. Pour la centrale hydraulique 1, on disposera la face frontale d'extrémité 1c comprenant les raccords hydrauliques 11, 12 et le premier connecteur 13 en position inférieure.

Un flotteur 4 de dimension L2 = 50 à 100 cm et D2 = 15 à 30 cm permet de supporter un outil de 10 à 15 kg pouvant être immergé jusqu'à 50 à 100m avec une quantité de lest totale de 250g à 750g dans les poches 43.

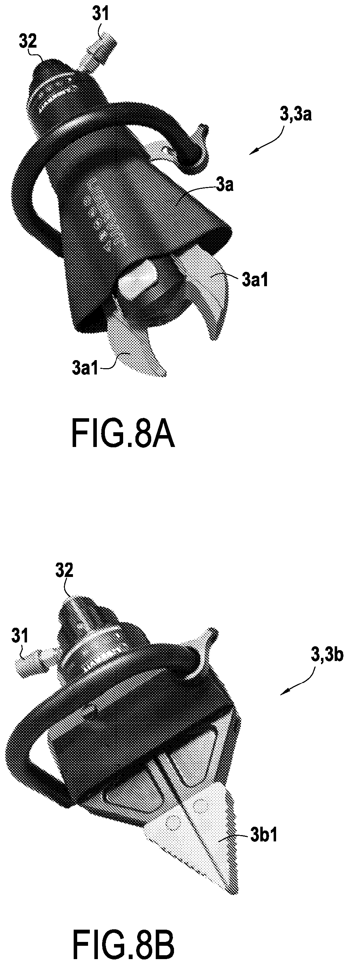

L'outil hydraulique 3 peut être une cisaille 3a tel que représenté figure 8A ou un écarteur 3b tel que représenté figure 8B. Dans la cisaille 3a, les 2 lames pivotantes 3a1 sont en position écartée au repos et les 2 lames 3a1 sont aptes à être rapprochées par pivotement sous l'effet de la pression de l'huile acheminée par le tuyau flexible 30 depuis la centrale hydraulique 1. Inversement dans l'écarteur 3b, les 2 lames 3b1 sont en position rapprochée au repos et sont aptes à être écartées par pivotement sous l'effet de l'huile sous pression acheminée par le tuyau flexible 30 de manière à ce que leur face externe dentelée soit opérante dans l'opération d'écartement. Cette cisaille 3a et cet écarteur 3b sont reliés à la centrale hydraulique 1 par un seul tuyau flexible 30 au niveau du raccord hydraulique 11 de la centrale hydraulique 1 depuis un raccord 31 de l'outil 3.

D'autres outils non représentés tel que perceuse, scie ou vérin peuvent nécessiter un deuxième tuyau flexible pour le retour de l'huile vers la centrale hydraulique au niveau du deuxième raccord hydraulique 12.

La face frontale 1c d'extrémité longitudinale de la première enceinte la de la centrale hydraulique 1 présente:
- 2 raccords hydrauliques 11 et 12 permettant le raccordement de 2 tuyaux flexibles dont au moins un tuyau flexible 30 acheminant l'huile du réservoir 7 depuis un premier raccord 11 vers un outil hydraulique 3 et le cas échéant si nécessaire le retour de l'huile se faisant via un deuxième flexible (non représenté) depuis ledit outil 3 vers le deuxième raccord 12, et
- Un premier connecteur électrique 13 décrit ci-après, relié électriquement au groupe motopompe 6, et fixé à la face d'extrémité 1c via des vis de fixation 13g, et
- Un interrupteur coupe-circuit 14 apte à commander la mise sous tension ou l'arrêt d'urgence (mise hors tension) du relais 6a et donc dudit groupe motopompe 6 vis-à-vis de son alimentation par la batterie 8.

Une commande filaire à distance 2 est apte à commander la mise en marche ou en arrêt du groupe motopompe 6 lorsque celui-ci est sous tension électrique par l'interrupteur principal 14. La commande filaire 2 comprend :
- une poignée 22 reliée d'un part via un raccord mécanique 22b à un outil hydraulique 3 et d'autre part à un deuxième connecteur électrique 21 via un fil électrique 20, et
- un deuxième connecteur électrique 21 apte à se brancher sur le dit premier connecteur électrique 13.

La poignée 22 de la commande à distance 2 comprend un raccord 22b permettant le raccordement avec un raccord 32 de l'outil hydraulique 3. Le raccord 22b comprend une première bague périphérique 2b mobile en translation et comprenant deux ergots de verrouillage 2d montés radialement sur la bague 2b et diamétralement opposés. Le raccord 22b comprend aussi une deuxième bague fixe axiale 2c à l'intérieur de la bague mobile 2b comprenant deux ergots de verrouillage 2e montés radialement sur la deuxième bague axiale 2c, diamétralement opposés et décalés angulairement par rapport aux ergots 2d. Les ergots 2d et 2e coopèrent avec une encoche 34 d'une troisième bague 33 du raccord 32 de l'outil 3 et permettent le positionnement en verrouillage et le déverrouillage d'une seule main des raccords 22b et 32 l'un par rapport à l'autre par mouvements relatif de translation et rotation combinés.

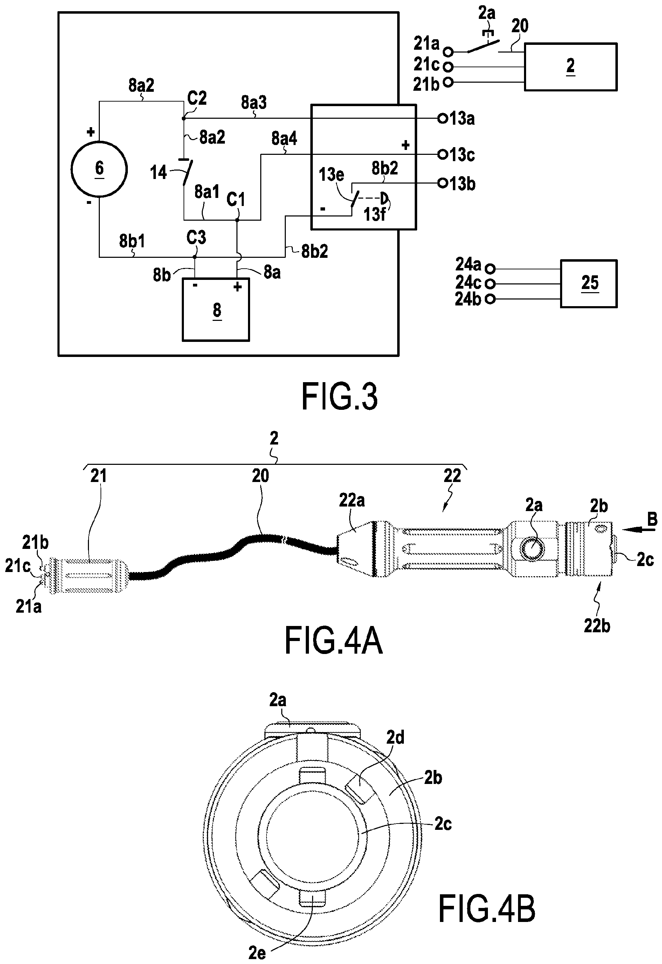

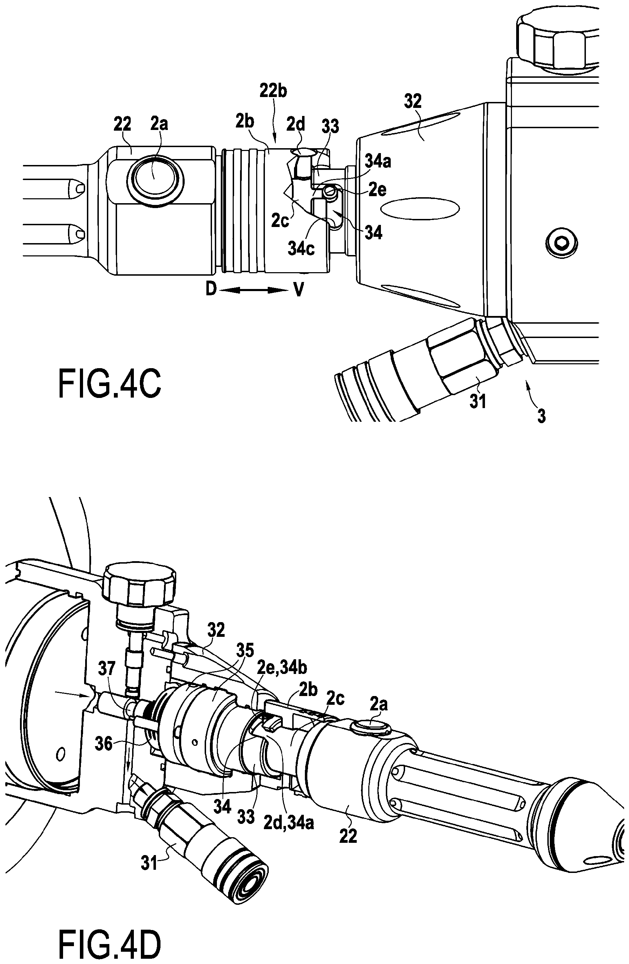

Plus précisément, comme montré figures 4C et 4D, le principe de verrouillage déverrouillage à une main est le suivant. On positionne l'ergot 2e en de face à l'ouverture 34a de l'encoche 34 de la troisième bague 33 par rotation de la poignée 22, l'ergot 2d venant talonner sur la troisième bague 33 fait reculer automatiquement la première bague mobile 2b. A ce moment-là, il faut tourner la poignée 22 dans le sens F. Ainsi l'ergot 2e sera déplacé vers le fond 34b de l'encoche 34 décalé transversalement par rapport à l'ouverture d'accès 34a. Et, la première bague mobile 2b poussée par un ressort interne va introduire l'ergot 2d dans l'ouverture 34a de l'encoche 34 de la bague fendue 33. Ainsi, la poignée 22 se trouve verrouillée en rotation par l'ergot 2d et en translation par l'ergot 2e. Pour procéder au déverrouillage, il faut tirer la bague mobile 2b dans la direction D, tourner la bague mobile 2b dans la direction O puis extraire la poignée 22.

Sur la figure 4D, lorsque la poignée 22 est verrouillée sur le raccord 32 de l'outil, il est possible de réguler l'ouverture d'un clapet à bille 37 commandant le passage de l'huile de retour vers le raccord 31 et le tuyau flexible 30 jusqu'à la centrale hydraulique. Ce contrôle de l'ouverture du clapet 37 se fait par rotation de robinets 35 montés sur un filetage et coopérant avec un ressort 36 comme suit. Le ressort 36 maintient les robinets 35 en position de fermeture par défaut du clapet 37. La rotation relative selon l'axe longitudinal de la poignée 22 par rapport au raccord 32 entraînant la rotation relative de la troisième bague 33 et des robinets 35 par rapport au raccord 32 ce qui permet de déplacer et contraindre le ressort 36 et ainsi ouvrir le clapet 37.

Pour rendre la commande filaire à distance 2 connectable et déconnectable manuellement en position immergée, il était indispensable que même si les utilisateurs venaient à mettre la centrale hydraulique dans l'eau sans avoir pensé à mettre le premier connecteur 13 hors tension électrique par l'intermédiaire du coupe-circuit général 14 qu'aucun phénomène de court-circuit ou phénomène électrolytique ne vienne détruire les bornes électriques du premier connecteur 13. Pour résoudre ce problème, les inventeurs ont développé un premier connecteur 13 femelle doté de 3 bornes contact 13a, 13b et 13c dans des cavités 131, 132 et 133 reliées et coopérant avec la batterie 8, l'interrupteur 14, et le groupe motopompe 6 comme montré sur le schéma de la figure 3 et décrit ci-après.

Le premier connecteur 13 comprend 2 bornes 13a, 13b aptes à coopérer avec des bornes males 21a, 21b du deuxième connecteur 21 de la commande filaire à distance 2. Le connecteur 13 comprend également une troisième borne 13c laquelle en combinaison avec la borne 13b est apte à permettre le branchement des bornes 24b et 24c d'un troisième connecteur électrique 24 d'un dispositif de chargement 25 de la batterie 8 lorsque la centrale hydraulique 1 est en position hors d'eau.

Les 3 bornes 21a, 21b et 21c du deuxième connecteur électrique mâle 21 sont disposées l'une par rapport à l'autre de manière à pouvoir coopérer avec les bornes 13a, 13b et respectivement 13c du premier connecteur femelle 13 en rentrant dans les cavités 131, 132 et 133 lorsque le deuxième connecteur 21 est branché sur le premier connecteur 13 en créant un contact entre engageant les bornes 21a et 21b et les bornes 13a et 13b.

Un détrompeur 23 comprenant un élément male latéral 23a sur la paroi latérale du deuxième connecteur 21 et un élément femelle complémentaire 23b au niveau du premier connecteur 13 permettent d'effectuer un guidage plus aisé du raccordement entre les 2 connecteurs.

Du fait que le premier connecteur comporte 3 bornes femelles, on a adjoint une troisième borne male 21c au deuxième connecteur 21 et une troisième borne male 24a au deuxième connecteur 24 qui ne participent pas électriquement au branchement mais servent uniquement de détrompeur et participent à l'étanchéité des branchements lors du branchement des deuxième et troisième connecteurs électriques 21 et 24 sur le premier connecteur électrique 13.

Un fil 8a relie le pôle positif de la batterie 8 à un fil 8a1 en c1 lequel fil 8a1 rejoint un interrupteur coupe-circuit 14. Un fil 8a2 relie l'interrupteur coupe-circuit 14 au groupe motopompe 6. Le pôle positif de la batterie 8 est donc relié au groupe motopompe via 8a, 8a1, 14 et 8a2 successivement.

Un fil 8a3 relie la borne 13a du premier connecteur au fil 8a2 en c2 après l'interrupteur 14 de sorte que la borne 13a est reliée au groupe motopompe 6 via les fils 8a3 et 8a2. En fait, le groupe motopompe 6 coopère avec une électrovanne (non représentée) qui autorise le passage de l'huile lorsque le groupe motopompe6 est alimenté électriquement et mis en marche. Et, le fil 8a3 assure la liaison électrique entre la borne 13a et la dite électrovanne laquelle est reliée à un relais de démarrage (non représenté) du groupe motopompe en c2.

Un fil 8b relie pôle négatif de la batterie 8 à un fil 8b1 en c3 qui rejoint le groupe motopompe 6. Un fil 8b2 relie le fil 8b1 en c3 un interrupteur 13e du premier connecteur 13 puis à la borne 13b du premier connecteur 13.

Lorsque l'interrupteur 14 et/ou l'interrupteur 13e est ouvert (interruption de l'alimentation électrique, coupe-circuit sur OFF), la batterie 8 n'est plus alimentée en électricité et les bornes 13a-13b sont inopérantes pour alimenter le groupe motopompe 6 lorsque les bornes 21a et 21b du deuxième connecteur 21 sont branchées sur les bornes 13a et 13b du premier connecteur 13. Lorsque l'interrupteur est fermé (coupe circuit sur ON), le groupe motopompe est alimenté en électricité et la mise en marche du moteur du groupe motopompe 6 requiert en outre que le relais soit activé par un signal électrique provenant de la borne 13a.

Un fil 8a4 relie le fil 8a1 en c1 en amont de l'interrupteur 14 à la borne 13c du premier connecteur 13. Lorsque l'interrupteur 14 est ouvert (OFF), les bornes 13c et 13b restent opérantes pour recharger la batterie lorsque les bornes 24b et 24c du chargeur 25 sont branchées sur les bornes 13b et 13c du premier connecteur 13.

La mise en oeuvre de la mise en marche ou arrêt du moteur du groupe motopompe 6 se fait par l'intermédiaire du contacteur 2a de la commande filaire à distance 2 les 2 bornes 13a, 13b sont sous tension électrique ce qui requiert que les bornes 21a, 21b du deuxième connecteur 21 soient en contact avec les bornes 13a et 13b du premier connecteur 13 et que le contacteur 2a assure la continuité de la liaison qui relie les bornes 21a et 21b dans la commande 2.

Pour ce faire, le premier connecteur 13 est équipé d'un premier ergot 13d disposé longitudinalement dans sa direction axiale X₃X₃' monté de manière à être mobile en translation dans la direction axiale longitudinale X₃X₃' au sein d'une cavité 133 du premier connecteur 13.

Ainsi lorsque le deuxième connecteur 21 est branché sur le premier connecteur avec les bornes 21a, 21b totalement engagées dans les cavités 131 et 132 et en contact avec les bornes 13a, 13b, le flasque 21d du deuxième connecteur 21 vient buter sur l'extrémité avant du dit premier ergot 13d mobile en translation. Cette butée provoque le déplacement en translation du premier ergot 13d jusqu'à ce que l'extrémité arrière du premier ergot 13d active au fond de la cavité 133 le bouton 13f d'un interrupteur électrique 13e en appuyant dessus. Cet appui sur le bouton 13f rétablit la continuité de liaison du fil 8b2 qui assure la liaison entre la borne 13b et le pole négatif de la batterie 8. Ceci permet de relier électriquement les bornes 13a et 13b du fait que la borne 13a est relié via un fil 8a au pôle positif de la batterie 8 via les fils 8a1, 8a2 et 8a3, lorsque l'interrupteur 14 assure la liaison électrique entre 8a1 et 8a2.

Plus précisément, cet élément 13f est mobile en translation dans la direction axiale longitudinale X₃X₃' du premier connecteur 13, son déplacement vers l'arrière (vers le fond de la cavité 133) sous l'effet du déplacement vers l'arrière du premier ergot 13d crée la connexion électrique entre les bornes 13a et 13b et donc simultanément entre les bornes 21a et 21b lorsque le connecteur 21 est branché et totalement engagé dans le premier connecteur 13. L'élément 13f coopère avec un moyen de rappel 13g qui le déplace vers l'avant de sorte que le contact électrique entre les bornes 13a et 13b est supprimé, en l'absence de butée et déplacement vers l'arrière du flasque 21d contre le premier ergot 13d, lorsque le deuxième connecteur 21 est débranché du premier connecteur 13.

Les bornes 13a et 13b sont montées sur des ressorts 13h au fond des cavités 131 et 132 de sorte qu'elles soient initialement en position avant (le plus éloigné de du fond des cavités 131 et 132). Ainsi, on s'assure qu'un contact étanche via des joint toriques 40 des bornes 13a et 13b avec les bornes 21a et 21b se fait dès avant que le premier ergot n'arrive en contact avec le bouton 13e, du fait que le premier ergot est déplacé en translation arrière vers le fond de sa cavité 133 simultanément au même déplacement en translation des bornes 13a et 13b déjà en contact étanche avec les bornes 21a et 21b.

Les bornes 21a, 21b sont équipées de joints toriques 40 d'extrémité assurant l'étanchéité du contact entre les bornes 21a- 21b et 13a- 13b lorsque le deuxième connecteur 21 est branché dans le premier connecteur 13, évitant ainsi toute entrée d'eau dans la centrale hydraulique 1 immergée.

Inversement, lorsque le deuxième connecteur 21 et le premier connecteur 13 sont débranchés, les bornes 13a, 13b du premier connecteur 13 se trouvent automatiquement hors tension électrique du fait que l'ergot de contact 13d sous l'effet d'un moyen de rappel automatique 13g reprend sa position initiale en translation dans laquelle les 2 bornes femelles 13a et 13b ne sont pas en contact électrique l'une avec l'autre.

La poignée 22 de la commande filaire à distance 2 comprend un contacteur électrique 2a monté de telle sorte qu'il est nécessaire d'appuyer et maintenir sur le contacteur 2a de la poignée 22 pour établir la continuité de contact du fil 20 assurant la liaison électrique entre les bornes 21a et 21b du deuxième connecteur permettre la mise en marche de l'alimentation électrique 6a du moteur électrique du groupe motopompe 6 de la centrale hydraulique 1 après branchement des premier et deuxième connecteurs 13 et 21 et de l'interrupteur 14 sur ON.

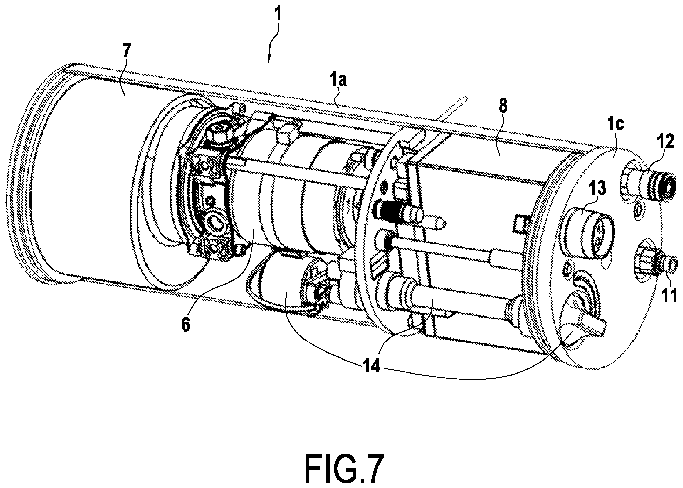

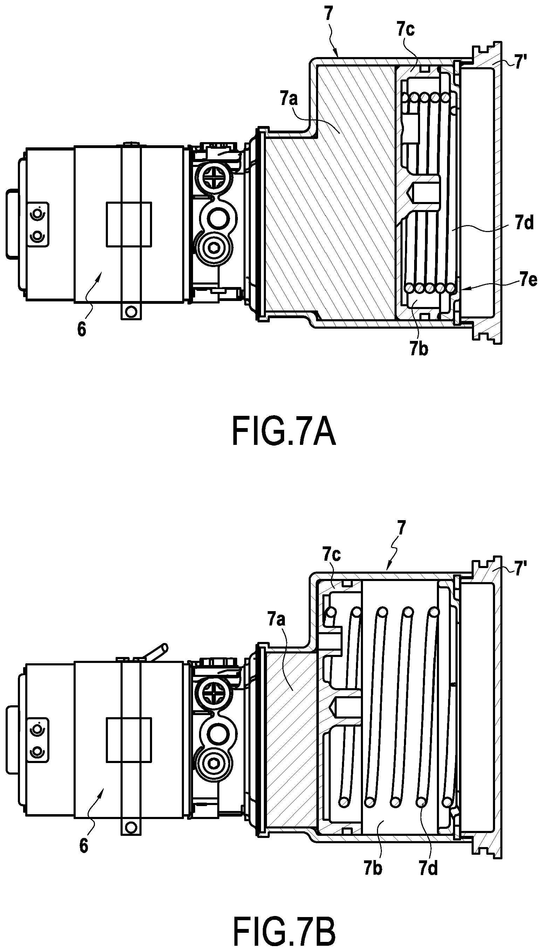

Le réservoir d'huile 7 adjacent au groupe motopompe 6 équipé d'un moteur électrique 6a, renferme un piston mobile 7c délimitant un compartiment 7a entièrement rempli d'huile à l'intérieur du réservoir 7 du fait qu'un ressort 7d dans le compartiment 7b applique une pression sur le piston mobile 7c. La forme du réservoir 7 permet que celui-ci présente toujours une réserve d'huile 7a en position d'extension maximale du ressort 7d et de translation maximale concomitante du piston 7 comme représenté figure 7B.

Pour une utilisation optimale du dispositif selon l'invention, celui-ci sera mis en oeuvre par 2 opérateurs. Un premier opérateur dédié voire relié à la centrale hydraulique 1 en assure le déplacement et la commande de l'interrupteur coupe-circuit 14 voire le branchement du deuxième connecteur 21 sur le premier connecteur 13 et du tuyau flexible 30 sur le raccord 11. Et, un deuxième opérateur est dédié à l'outil hydraulique 3, de préférence le tenant d'une main, l'outil hydraulique 3 étant suspendu au premier flotteur 4 via l'élingue 5 et de préférence relié dès le départ à la centrale hydraulique 1 via la commande filaire à distance 2 et au moins à un premier tuyau flexible 30.

Pour la mise en marche de l'outil 3, il conviendra tout d'abord d'actionner l'interrupteur général 14 de mise sous tension du groupe motopompe 6 par la batterie 8 puis d'appuyer sur le contacteur électrique 2a de la poignée 22 de la commande filaire à distance pour commander la mise en marche du groupe motopompe 6.

## Revendications

1. Dispositif utile pour le transport et/ou manutention de matériel en milieu subaquatique pour la réalisation de travaux, comprenant au moins les composants suivants:
- une centrale hydraulique flottante (1) comprenant dans une première enceinte (1a), de préférence à paroi cylindrique, un groupe motopompe électrique (6), une batterie (8) apte à alimenter en électricité le groupe motopompe, un réservoir (7) de fluide, de préférence de l'huile, la dite première enceinte (1a)étant apte à être rendue submersible par des premiers lests (16),
- au moins un outil hydraulique (3) relié à au moins un raccord hydraulique (11,12) de la dite centrale hydraulique par au moins un tuyau flexible (30),
- au moins un flotteur indépendant (4), de préférence à paroi cylindrique, relié audit outil hydraulique (3) via une élingue (5) de longueur ajustable, ledit flotteur (4) étant apte à être rendu submersible par des seconds lests (43a), et
- une commande à distance filaire (2) commandant la mise en marche ou arrêt du groupe motopompe (6), la dite commande filaire à distance comprenant une poignée (22) équipée d'un contacteur électrique (2a) à une première extrémité d'un fil électrique (20), la deuxième extrémité du fil électrique (20) étant reliée au moins audit groupe motopompe (6).

2. Dispositif selon la revendication 1 **caractérisé en ce que** :
- un premier connecteur électrique (13) est fixé à la dite première enceinte, ledit premier connecteur électrique étant relié au moins audit groupe motopompe (6) et à la batterie (8), et
- la deuxième extrémité du fil électrique (20) de la dite commande à distance filaire (2) est reliée à un deuxième connecteur électrique (21) mâle ou femelle apte à être branché sur ledit premier connecteur électrique (13) femelle ou respectivement mâle, au niveau de ladite centrale hydraulique (1).

3. Dispositif selon la revendication 1 ou 2 **caractérisé en ce que** la dite centrale hydraulique comprend un interrupteur principal (14) coupe-circuit accessible au niveau de la dite première enceinte (1a) apte à commander la mise sous tension électrique ou hors tension électrique dudit groupe motopompe (6) par ladite batterie (8), la dite commande à distance (2) étant apte à commander la mise en marche ou arrêt du groupe motopompe (6) lorsque celui-ci est sous tension électrique par la dite batterie au niveau du dit interrupteur.

4. Dispositif selon la revendication 2 ou 3 **caractérisé en ce que** ledit premier connecteur électrique (13) comprend deux premières bornes de contact électrique (13a, 13b), qui ne sont pas reliées en contact électrique entre elles au niveau dudit premier connecteur (13) en l'absence de branchement dudit deuxième connecteur (21) dans ledit premier connecteur (13) et ne deviennent reliées en contact électrique entre elles et ainsi aptes à transmettre la commande de mise en marche ou arrêt du dit groupe motopompe (6) à partir de la dite commande à distance (2) seulement lorsque le dit deuxième connecteur électrique (21) de la dite commande à distance filaire (2) est branché sur ledit premier connecteur (13).

5. Dispositif selon la revendication 4 **caractérisé en ce que** ledit premier connecteur électrique (13) est un connecteur femelle comprenant deux premières bornes de contact (13a, 13b) au fond de deux premières cavités (131, 132), et un premier ergot (13d) mobile en translation au sein d'une troisième cavité (133) dudit premier connecteur (13), le dit déplacement en translation dudit premier ergot permettant l'établissement de la liaison de contact électrique entre les deux premières bornes (13a,13b) du premier connecteur (13), et le dit deuxième connecteur électrique (21) est un connecteur male comprenant deux deuxièmes bornes mâles (21a, 21b) aptes à contacter les dites premières bornes au sein des dites premières cavités et un élément de butée (21d) apte à déplacer le dit premier ergot (13d) au sein de la dite troisième cavité permettant l'établissement de la liaison de contact électrique entre les deux premières bornes (13a,13b) du premier connecteur (13), lorsque ledit deuxième connecteur (21) est branché sur ledit premier connecteur (13).

6. Dispositif selon la revendication 5 **caractérisé en ce que** le déplacement en translation dudit premier ergot (13d) en translation au sein d'une troisième cavité (133) actionne un bouton (13f) d'un interrupteur (13e) qui assure la continuité de liaison électrique d'un fil électrique (8b2) reliant l'une (13b) des dites premières bornes à la batterie(8).

7. Dispositif selon l'une des revendications 1 à 6 **caractérisé en ce que** ladite batterie (8) est apte à être chargée par un chargeur indépendant (25) comprenant un troisième connecteur électrique (24) apte à se brancher sur une des deux premières bornes (13b) reliée à la batterie et une troisième borne (13c) du premier connecteur reliée à l'autre pôle de la batterie.

8. Dispositif selon l'une des revendications 1 à 7 **caractérisé en ce que** le dit réservoir (7) de fluide de la centrale hydraulique comprend un piston mobile (7c) apte à être déplacé par un ressort (7d) de manière à confiner en permanence le fluide (7a) dans un espace entièrement rempli de fluide.

9. Dispositif selon l'une des revendications 1 à 8 **caractérisé en ce que** la dite commande filaire à distance (2) comprend une poignée (22) apte à être fixée sur le dit outil hydraulique (3).

10. Dispositif selon la revendication 9 **caractérisé en ce que** le dit outil comprend un raccord (32) apte à permettre la fixation de la dite poignée (22) sur ledit outil via un raccord (22a) de la dite poignée, la dite fixation permettant un verrouillage et déverrouillage par un mouvement combiné de translation et rotation relative du raccord (22a) de la poignée par rapport au raccord (32) de l'outil hydraulique et la dite fixation de la poignée autorisant une rotation relative de la poignée par rapport à l'outil, une fois ladite poignée verrouillée, la dite rotation relative de la poignée étant apte à contrôler le passage de l'huile à travers le raccord hydraulique (31) de l'outil et le dit tuyau flexible (30) au moins pour le retour de l'huile vers la centrale hydraulique.

11. Dispositif selon l'une des revendications 1 à 10 **caractérisé en ce que** la dite première enceinte (1a) de la dite centrale hydraulique (1) est de forme cylindrique et comprend plusieurs premiers compartiments externes latéraux (16) accessibles depuis l'extérieur, de préférence sous forme de poches d'une enveloppe la recouvrant, aptes à recevoir des dits premiers lests, lesdits compartiments étant positionnés et répartis de manières à pouvoir faire adopter une position de la direction longitudinale axiale de la dite première enceinte (X₁X₁') horizontale ou verticale selon le positionnement et la quantité de dits premiers lests dans les différents premiers compartiments externes (16).

12. Dispositif selon l'une des revendications 1 à 11 **caractérisé en ce que** le dit flotteur (4) est de forme cylindrique et comprend des seconds compartiments externes latéraux (43) accessibles depuis l'extérieur, de préférence sous forme de poches d'une enveloppe le recouvrant, aptes à recevoir des dits seconds lests (43a), et ledit flotteur comprenant au moins deux crochets de fixation (41,42) apte à permettre la fixation d'une extrémité (5a) de la dite élingue (5), les dits crochets étant positionnés de manière à pouvoir faire adopter une position du flotteur avec sa direction longitudinale axiale (X₂X₂') horizontale ou verticale selon le positionnement de l'élingue sur l'un ou l'autre des dits crochets et selon le positionnement et la quantité de dits seconds lests dans les différents seconds compartiments externes (43).

13. Dispositif selon l'une des revendications 1 à 12 **caractérisé en ce que** le dit outil hydraulique (3) est choisi parmi une cisaille, une pince, un écarteur, un vérin, une perceuse ou une scie.

14. Procédé de transport et/ou de réalisation de travaux en milieu subaquatique avec un dispositif selon l'une des revendications 1 à 13 dans lequel on transporte en milieu aquatique les dits composants avec au moins ledit outil hydraulique (3) suspendu au dit flotteur en position subaquatique.

15. Procédé selon la revendication 14 **caractérisé en ce qu'**on met en oeuvre le dispositif pour une intervention subaquatique, de préférence jusqu'à une profondeur jusqu'à 100m, en réglant la profondeur d'immersion de ladite centrale hydraulique (1) et dudit flotteur (4) en contrôlant leur flottabilité par ajout de dits premiers et seconds lests dans les dits premiers et seconds compartiments (16,43) et en ajustant la longueur de la dite élingue de liaison (5) entre ledit outil hydraulique (3) et le dit flotteur (4).

## Patentansprüche

1. Vorrichtung zum Transportieren und/oder Handhaben von Material in einer Unterwasserumgebung zum Durchführen von Arbeiten, umfassend mindestens die folgenden Komponenten:
- eine schwimmende Hydraulikeinheit (1), die in einem ersten Gehäuse (1a), vorzugsweise mit zylindrischer Wand, ein Elektromotorpumpenaggregat (6), eine Batterie (8), die geeignet ist, das Motorpumpenaggregat mit Strom zu versorgen, einen Behälter (7) für Flüssigkeit, vorzugsweise Öl, aufweist, wobei das erste Gehäuse (1a) geeignet ist, durch erste Ballaste (16) tauchbar gemacht zu werden,
- mindestens ein hydraulisches Werkzeug (3), das zumindest mit einem hydraulischen Anschluss (11, 12) der Hydraulikeinheit durch mindestens einen flexiblen Schlauch (30) verbunden ist,
- mindestens einen unabhängigen Schwimmer (4), vorzugsweise mit zylindrischer Wand, der mit dem hydraulischen Werkzeug (3) über eine Schlinge (5) von einstellbarer Länge verbunden ist, wobei der Schwimmer (4) geeignet ist, durch zweite Ballaste (43a) tauchbar gemacht zu werden, und
- eine Kabelfernsteuerung (2), die das Ein- oder Ausschalten des Motorpumpenaggregats (6) steuert, wobei die Kabelfernsteuerung einen Griff (22) aufweist, der mit einem elektrischen Kontaktgeber (2a) an einem ersten Ende eines elektrischen Kabels (20) ausgestattet ist, wobei das zweite Ende des elektrischen Kabels (20) zumindest mit dem Motorpumpenaggregat (6) verbunden ist.

2. Vorrichtung nach Anspruch 1, **dadurch gekennzeichnet, dass**:
- ein erster elektrischer Steckverbinder (13) an dem ersten Gehäuse befestigt ist, wobei der elektrische Steckverbinder zumindest mit dem Motorpumpenaggregat (6) und der Batterie (8) verbunden ist, und
- das zweite Ende des elektrischen Kabels (20) der Kabelfernsteuerung (2) mit einem zweiten männlichen oder weiblichen elektrischen Steckverbinder (21) verbunden ist, der geeignet ist, an dem ersten männlichen bzw. weiblichen elektrischen Steckverbinder (13) an der Hydraulikeinheit (1) angeschlossen zu werden.

3. Vorrichtung nach Anspruch 1 oder 2, **dadurch gekennzeichnet, dass** die Hydraulikeinheit einen Haupttrennschalter (14) aufweist, der an dem ersten Gehäuse (1a) zugänglich ist, der geeignet ist, das Unterspannung- oder Außerspannungssetzen des Motorpumpenaggregats (6) durch die Batterie (8) zu steuern, wobei die Kabelfernsteuerung (2) geeignet ist, das Ein- oder Ausschalten des Motorpumpenaggregats (6), wenn dieses unter elektrischer Spannung steht, durch die Batterie an dem Schalter zu steuern.

4. Vorrichtung nach Anspruch 2 oder 3, **dadurch gekennzeichnet, dass** der erste elektrische Steckverbinder (13) zwei erste elektrische Kontakt-Anschlussklemmen (13a, 13b) aufweist, die an dem ersten Steckverbinder (13) nicht in elektrischem Kontakt miteinander verbunden sind, wenn der zweite Steckverbinder (21) nicht an dem ersten Steckverbinder (13) angeschlossen ist, und nur in elektrischem Kontakt miteinander verbunden werden und somit geeignet sein, den Befehl zum Ein- oder Ausschalten des Motorpumpenaggregats (6) ausgehend von der Fernsteuerung (2) zu übertragen, wenn der zweite elektrische Steckverbinder (21) der Kabelfernsteuerung (2) an dem ersten Steckverbinder (13) angeschlossen ist.

5. Vorrichtung nach Anspruch 4, **dadurch gekennzeichnet, dass** der erste elektrische Steckverbinder (13) ein weiblicher Steckverbinder ist, der zwei erste Kontakt-Anschlussklemmen (13a, 13b) am Boden von zwei ersten Hohlräumen (131, 132) und einen ersten Sporn (13d), der translationsbeweglich ist, in einem dritten Hohlraum (133) des ersten Steckverbinders (13) aufweist, wobei die translatorische Bewegung des ersten Sporns das Erstellen einer elektrischen Kontaktverbindung zwischen den zwei ersten Kontakt-Anschlussklemmen (13a, 13b) des ersten Steckverbinders (13) ermöglicht, und der zweite elektrische Steckverbinder (21) ein männlicher Steckverbinder ist, der zwei zweite männliche Anschlussklemmen (21a, 21b), die geeignet sind, einen Kontakt mit den ersten Anschlussklemmen in den ersten Hohlräumen zu erstellen, und ein Anschlagelement (21d) aufweist, das geeignet ist, den ersten Sporn (13d) in dem dritten Hohlraum zu verschieben, wodurch das Erstellen der elektrischen Kontaktverbindung zwischen den zwei ersten Kontakt-Anschlussklemmen (13a, 13b) des ersten Steckverbinders (13) ermöglicht wird, wenn der zweite Steckverbinder (21) an dem ersten Steckverbinder (13) angeschlossen ist.

6. Vorrichtung nach Anspruch 5, **dadurch gekennzeichnet, dass** die translatorische Bewegung des ersten Sporns (13d) in Translation in dem dritten Hohlraum (133) einen Knopf (13f) eines Schalters (13e) betätigt, der die Kontinuität der elektrischen Verbindung eines elektrischen Kabels (8b2) gewährleistet, das den einen (13b) der ersten Anschlussklemmen mit der Batterie (8) verbindet.

7. Vorrichtung nach einem der Ansprüche 1 bis 6, **dadurch gekennzeichnet, dass** die Batterie (8) geeignet ist, durch ein unabhängiges Ladegerät (25) geladen zu werden, das einen dritten elektrischen Steckverbinder (24) aufweist, der geeignet ist, an einer der zwei ersten Anschlussklemmen (13b), die mit der Batterie verbunden ist, und einer dritten Anschlussklemme (13c) des ersten Steckverbinders, die mit dem anderen Pol der Batterie verbunden ist, angeschlossen zu werden.

8. Vorrichtung nach einem der Ansprüche 1 bis 7, **dadurch gekennzeichnet, dass** der Behälter (7) für Flüssigkeit der Hydraulikeinheit einen beweglichen Kolben (7c) aufweist, der geeignet ist, durch eine Feder (7d) derart bewegt zu werden, um die Flüssigkeit (7a) permanent in einen Raum einzuschließen, der vollständig mit Flüssigkeit gefüllt ist.

9. Vorrichtung nach einem der Ansprüche 1 bis 8, **dadurch gekennzeichnet, dass** die Kabelfernsteuerung (2) einen Griff (22) aufweist, der geeignet ist, auf dem hydraulischen Werkzeug (3) befestigt zu werden.

10. Vorrichtung nach Anspruch 9, **dadurch gekennzeichnet, dass** das Werkzeug ein Anschlussstück (32) aufweist, das geeignet ist, das Befestigen des Griffs (22) auf dem Werkzeug über ein Anschlussstück (22a) des Griffs zu ermöglichen, wobei das Befestigen ein Verriegeln und Entriegeln durch eine relative kombinierte Dreh- und Translationsbewegung des Anschlussstücks (22a) des Griffs in Bezug auf das Anschlussstück (32) des hydraulischen Werkzeugs ermöglicht und wobei das Befestigen des Griffs eine relative Drehung des Griffs in Bezug auf das Werkzeug ermöglicht, sobald der Griff verriegelt ist, wobei die relative Drehung des Griffs geeignet ist, den Durchgang des Öls durch den hydraulischen Anschluss (31) des Werkzeugs und den flexiblen Schlauch (30) mindestens für die Rückkehr des Öls zur Hydraulikeinheit zu steuern.

11. Vorrichtung nach einem der Ansprüche 1 bis 10, **dadurch gekennzeichnet, dass** das erste Gehäuse (1a) der Hydraulikeinheit (1) von zylindrischer Form ist und mehrere seitliche äußere Fächer (16) aufweist, die von außen zugänglich sind, vorzugsweise in Form von Taschen eines Umschlags, die ihn bedecken, die geeignet sind, erste Ballaste aufzunehmen, wobei die Fächer derart angeordnet und verteilt sind, um eine vertikale oder horizontale Position der axialen Längsrichtung des ersten Gehäuses (X₁X₁') je nach dem Positionieren und der Menge der ersten Ballaste in den verschiedenen ersten äußeren Fächer (16) einnehmen zu können.

12. Vorrichtung nach einem der Ansprüche 1 bis 11, **dadurch gekennzeichnet, dass** der erste Schwimmer (4) von zylindrischer Form ist und zweite seitliche äußere Fächer (43) aufweist, die von außen zugänglich sind, vorzugsweise in Form von Taschen eines Umschlags, die ihn bedecken, die geeignet sind, zweite Ballaste (43a) aufzunehmen, wobei der Schwimmer mindestens zwei Befestigungshaken (41, 42) aufweist, die geeignet sind, das Befestigen eines Endes (5a) der Schlinge (5) zu ermöglichen, wobei die Haken derart positioniert sind, um eine Position des Schwimmers mit seiner vertikalen oder horizontalen axialen Längsrichtung (X₂X₂') je nach dem Positionieren der Schlinge auf einem oder dem anderen der Haken und je nach dem Positionieren und der Menge der zweiten Ballaste in den verschiedenen zweiten äußeren Fächern (43) einnehmen zu lassen.

13. Vorrichtung nach einem der Ansprüche 1 bis 12, **dadurch gekennzeichnet, dass** das hydraulische Werkzeug (3) ausgewählt ist aus einer Schere, einer Zange, einem Abstandhalter, einem Heber, einer Bohrmaschine oder einer Säge.

14. Verfahren zum Transportieren und/oder zum Durchführen von Arbeiten in einer Unterwasserumgebung mit einer Vorrichtung nach einem der Ansprüche 1 bis 13, wobei die Komponenten mit mindestens dem hydraulischen Werkzeug (3) aufgehängt an dem Schwimmer in Unterwasserposition in einer Unterwasserumgebung transportiert werden.

15. Verfahren nach Anspruch 14, **dadurch gekennzeichnet, dass** die Vorrichtung für einen Unterwassereingriff, vorzugsweise bis zu einer Tiefe bis 100 m, eingesetzt wird, indem die Eintauchtiefe der Hydraulikeinheit (1) und des Schwimmers (4) geregelt wird, indem ihr Auftrieb durch Hinzufügen der ersten und zweiten Ballaste in die ersten und zweiten Fächer (16, 43) und durch Anpassen der Länge der Verbindungsschlinge (5) zwischen dem hydraulischen Werkzeug (3) und dem Schwimmer (4) gesteuert wird.

## Claims

1. A device useful for transporting and/or handling equipment in an underwater environment for performing work, the device comprising at least the following components:
- a floating hydraulic unit (1) comprising a first enclosure (1a), preferably with a cylindrical wall, an electrical pump unit (6), a battery (8) suitable for electrically powering the pump unit, a fluid tank (7), preferably containing oil, said first enclosure (1a) being suitable for being made submersible by first ballast (16);
- at least one hydraulic tool (3) connected to at least one hydraulic coupling (11, 12) of said hydraulic unit via at least one flexible hose (30);
- at least one independent float (4), preferably having a cylindrical wall, connected to said hydraulic tool (3) via a sling (5) of adjustable length, said float (4) being suitable for being made submersible by second ballast (43a); and
- a wired remote control (2) for switching on or stopping the pump unit (6), said wired remote control comprising a handle (22) fitted with an electrical contactor (2a) at a first end of an electric wire (20), the second end of the electric wire (20) being connected to said pump unit (6).

2. A device according to claim 1, **characterized in that**:
- a first electrical connector (13) is fastened to said first enclosure, said first electrical connector being connected at least to said pump unit (6) and to the battery (8); and
- the second end of the electric wire (20) of said wired remote control (2) is connected to a second electrical connector (21) that may be male or female and that is suitable for being connected to said first electrical connector (13), which may be female or respectively male, at said hydraulic unit (1).

3. A device according to claim 1 or claim 2, **characterized in that** said hydraulic unit includes a main circuit breaker switch (14) accessible from said first enclosure (1a) for causing said pump unit (6) to be electrically powered or not electrically powered by said battery (8), said remote control (2) being suitable for switching on or off the pump unit (6) when it is electrically powered by said battery via said switch.

4. A device according to claim 2 or claim 3, **characterized in that** said first electrical connector (13) has two first electrical contact terminals (13a, 13b), which are not electrically connected together in said first connector (13) in the absence of said second connector (21) being connected in said first connector (13), and that become electrically connected together and thus suitable for transmitting the on/off command for said pump unit (6) from said remote control (2) only once said second electrical connector (21) of said wired remote control (2) is connected to said first connector (13).

5. A device according to claim 4, **characterized in that** said first electrical connector (13) is a female connector having two first contact terminals (13a, 13b) at the bottoms of two first cavities (131, 132), and a first stud (13d) movable in translation within a third cavity (133) of said first connector (13), said movement in translation of said first stud enabling the electrical contact connection to be established between the two first terminals (13a, 13b) of the first connector (13), and said second electrical connector (21) is a male connector having two male second terminals (21a, 21b) suitable for contacting said first terminals within said first cavities, and an abutment element (21d) suitable for moving said first stud (13d) within said third cavity enabling the electrical contact connection to be established between the two first terminals (13a, 13b) of the first connector (13) when said second connector (21) is connected to said first connector (13).

6. A device according to claim 5, **characterized in that** the movement in translation of said first stud (13d) in translation within a third cavity (133) actuates a button (13f) of a switch (13e) that provides continuity of the electrical connection of an electric wire (8b2) connecting one of said first terminals (13b) to the battery (8).

7. A device according to any one of claims 1 to 6, **characterized in that** said battery (8) is suitable for being charged by an independent charger (25) comprising a third electrical connector (24) suitable for being connected to one of the two first terminals (13b) connected to the battery and to a third terminal (13c) of the first connector that is connected to the other pole of the battery.

8. A device according to any one of claims 1 to 7, **characterized in that** said fluid tank (7) of the hydraulic unit includes a movable piston (7c) suitable for being moved by a spring (7d) so as to confine the fluid (7a) permanently in a space that is completely filled with fluid.

9. A device according to any one of claims 1 to 8, **characterized in that** said wired remote control (2) comprises a handle (22) suitable for being fastened to said hydraulic tool (3).

10. A device according to claim 9, **characterized in that** said tool comprises a coupling (32) suitable for enabling said handle (22) to be fastened to said tool via a coupling (22a) of said handle, said fastening enabling locking and unlocking to be performed by combined movement in translation and in rotation of the coupling (22a) of the handle relative to the coupling (32) of the hydraulic tool, and said fastening of the handle enabling the handle to move in rotation relative to the tool once said handle is locked, said movement in relative rotation of the handle being suitable for controlling the passage of oil via the hydraulic coupling (31) of the tool and said flexible hose (30) at least for returning oil to the hydraulic unit.

11. A device according to any one of claims 1 to 10, **characterized in that** said first enclosure (1a) of said hydraulic unit (1) is cylindrical in shape and includes a plurality of first lateral external compartments (16) that are accessible from the outside, preferably in the form of pockets in a covering that covers the enclosure and suitable for receiving said first ballast, said compartments being positioned and distributed in such a manner as to be capable of causing the axial longitudinal direction (X₁X₁') of said first enclosure to adopt a horizontal position or a vertical position depending on the positioning and the quantity of said first ballast in the various first external compartments (16).

12. A device according to any one of claims 1 to 11, **characterized in that** said float (4) is cylindrical in shape and includes second lateral external compartments (43a) accessible from the outside, preferably in the form of pockets of a covering that covers the float, suitable for receiving said second ballast (43a), and said float including at least two fastener hooks (41, 42) suitable for enabling one end (5a) of said sling (5) to be fastened thereto, said hooks being positioned in such a manner as to enable the axial longitudinal direction (X₂X₂') of the float to adopt a horizontal position or a vertical position depending on the positioning of the sling on one or the other of said hooks and depending on the positioning and the quantity of said second ballast in the various second external compartments (43).

13. A device according to any one of claims 1 to 12, **characterized in that** said hydraulic tool (3) is selected from shears, a clamp, a spreader, a jack, a drill, and a saw.

14. A method of transporting and/or performing work in an underwater environment using a device according to any one of claims 1 to 13, wherein said components are transported in an underwater environment together with at least said hydraulic tool (3) suspended from said float in an underwater position.

15. A method according to claim 14, **characterized in that** the device is used for taking action underwater, preferably down to a depth of 100 m, by adjusting the immersion depth of said hydraulic unit (1) and of said float (4) by controlling their buoyancy by adding said first ballast and said second ballast in said first and second compartments (16, 43) and by adjusting the length of said sling (5) providing the connection between said hydraulic tool (3) and said float (4).
